# EUROPEAN PATENT APPLICATION

(11) **EP 1 677 488 A1**
(43) Date of publication of application: **05.07.2006**
(21) Application number: 05113057.3
(22) Date of filing: 29.12.2005
(51) Int. Cl.: H04L 29/08, H04L 29/06, G06F 9/46

(54) **Web application architecture**

(30) Priority: 04.01.2005 US 28915; 04.01.2005 US 28890
(71) Applicant: Microsoft Corporation, Redmond WA 98052 (US)
(72) Inventor: Bansod, Aditya, Redmond, WA 98052 (US); Wong, Chun Yu, Redmond, WA 98052 (US); Hsueh, Walter C., Redmond, WA 98052 (US)
(74) Representative: Grünecker, Kinkeldey, Stockmair & Schwanhäusser Anwaltssozietät

(57) **Abstract**

A method and protocol for communication between a first computer and a second computer is disclosed, along with a system providing a networked application in a client-server environment. A protocol includes a request from the first computer to the second computer including a function identifier for a function on the second computer and an argument for the function. The argument may be defined by a type for a function called by the function identifier. The protocol also includes a reply from the second computer to the first computer including the results of the function, with the reply defined as a script input for the first computer. A system providing a networked application in a client-server environment includes a set of application functions on the server, the application functions including a data type definition, and a set of client functions defining a scripting environment. The client functions are defined to include types matching each of the application functions on the server.

## Description

### BACKGROUND OF THE INVENTION

### Field of the Invention

The present invention is directed to providing network based applications, and is particularly applicable to providing Internet and Web-based applications.

### Description of the Related Art

As Internet based applications have become more powerful, maintaining a seamless and responsive user experience has become an important feature for developers. Web-based applications generally include one or more functions provided on a server which are accessed using a Web browser application running on a client computer. In order for clients (web browsers) and servers to communicate in a high speed manner, an efficient use of the communication protocol, generally HTTP, between them is required.

Typically, a web browser renders an interface to an application, or functional components of the application, by receiving pages and functions (typically in the form of a markup language, such as HTML,) from the server. In some cases, the browser must render a new page of received data with each response to a request for a page located on the server. One common format for providing such information is the Hyper Text Transfer Protocol (HTTP). Typically, a web browser will request a web page using a "GET" or "POST" command in HTTP, and all the information required to render the page will be returned to the web browser. Some amount of data, such as the information necessary to render a page, may be repeated several times even if a user is only updating a portion of the page. Although techniques have been developed to update data in only portions of a page by updating simple data requests from the web browser, such protocols have not been completely flexible in allowing developers full access to the underlying methods available in web based applications.

Current examples of client server protocols that allow browsers to remotely make method calls on classes and objects on a remote server include Simple Object Access Protocol (SOAP) and XML-RPC. Both SOAP and XML-RPC require clients to have an understanding of the transport data types. Both specify a standard way to encode parameters and return values in XML, and pass them over common network protocols. SOAP and XML-RPC are mainly used for server to server communication and thick client to server communication. They are both verbose protocols, and not necessarily very efficient. In particular, SOAP requires a relatively sophisticated mechanism on the client in order understand the data received from the server and make it available to the client. This can be difficult to accomplish in the simple scripting language such as JavaScript. One advantage of using JavaScript in a web browser is that nearly all web browser applications include a script engine enabling them to execute the script. Using the scripting engine of the web browser requires less customization on the client's side of the architecture.

Hence, a method for improving communication between a web browser and a client to initiate web based applications would be advantageous.

### SUMMARY OF THE INVENTION

A method and protocol for communication between a first computer and a second computer is disclosed, along with a system providing a networked application in a client-server environment

In one aspect the invention, roughly described, includes a system for providing a networked application in a client-server environment. In one embodiment, the system includes a set of application functions on the server, the application functions including a data type definition, and a set of client functions defined in a scripting environment. In a unique aspect, the client functions are defined to include types matching each of the application functions in the set of application functions.

In another embodiment, the invention is a method for providing web applications on the Internet. The method may include the steps of: providing a server environment including functions and objects on a server, the objects and functions having defined types; generating a client environment including functions and objects in a scripting environment, the functions and objects in the scripting environment having types mapping to corresponding functions and objects in the server environment; and providing the client environment to the server.

In yet another embodiment, the invention is a system for initializing and installing server and client components to provide a web-based application. The system includes a set of server applications having objects and methods having attributes. A code generator provides a JavaScript client side library and a server side library for each said object and method. A server side service includes a dispatcher and a marshaler routing data from the client to corresponding objects and functions on the server.

In a further embodiment, the invention is a system implementing Internet applications. The system includes a server including a set of application objects and methods each having a defined type. Also provided is a generation engine creating a client set of scripts calling said objects and methods, each script having a type definition matching at least one object or method of said set of application objects and methods. A response engine is provided to receive requests from one or more client scripts on a client processing device and routing said requests to one of said application objects and methods.

In another aspect, the invention, roughly described, comprises a communication protocol and method operating asymmetrically between computers operating on a network. Communications from a client to a server are optimized for data efficiency, and interpretation by the server. Communications from the server to the client are optimized for interpretation by the client using existing client application resources.

In one embodiment, the invention is a method of communicating between a client process and a server process in a distributed processing system. The method may comprise the steps of: issuing, by the client process, a function request to the server, the function request including a data string having a format defined by a type of a server function requested; receiving, by the server process, the function call and performing the requested function on the string; and issuing, by the server process, a response to the function request, the response being in a client side processing format defined by the server object.

In another embodiment, the invention may comprise a protocol for communication between a first computer and a second computer. The protocol includes a request from the first computer to the second computer including a function identifier for a function on the second computer and an argument for the function. The argument may be defined by a type for a function called by the function identifier. The protocol also includes a reply from the second computer to the first computer including the results of the function, with the reply defined as a script input.

In an alternative embodiment, the invention is a method of communication between a client and a server. In this embodiment, the method may include the steps of: formatting data in a request, the request including a parameter string ordered according to a data type on the server; sending the data in the request over a network; and creating a response to the data by formatting response data in a script input response format

### BRIEF DESCRIPTION OF THE DRAWINGS

FIG. 1 depicts a block diagram of computer hardware suitable for implementing the invention.

FIG. 2 is a flow chart representing a general method of the present invention for creating a client side proxies of the server development environment in accordance with one aspect of the present invention.

FIG. 3 is a client side method for obtaining the proxy environment generated in FIG. 2.

FIG. 4 is a block diagram of one embodiment of a system suitable for implementing the architecture of the present invention.

FIG. 5 is a flow chart representing one embodiment of the client and server interaction for a web based application operating utilizing the underlying architecture of the present invention.

FIG. 6 is a comparison between a server side object definition and a client side proxy object definition.

FIG. 7 is a first example of a server interface and corresponding JavaScript stub associated with the method.

FIG. 8 is an example of a client request to the server and a response from the server utilizing the protocol for implementing the method of the present invention.

FIG. 9 is a second example of a server side interface and a corresponding JavaScript stub.

FIG. 10 is a third example of a server side interface in the corresponding JavaScript stub.

FIG. 11 is a fourth example of a server side interface and a corresponding JavaScript stub.

FIG. 12 is a second example of a post in response protocol in accordance with the present invention.

FIG. 13 is a flow chart illustrating a method for the client to govern synchronous and asynchronous proxy calls by the client in accordance with the present invention.

### DETAILED DESCRIPTION

A unique architecture for implementing web based applications in a networked environment is provided. The architecture provides both a client and the server with a full set of programming interfaces, functions and objects available on the server, and minimizes data communications in a unique communication method, referred to as the "protocol", between the client and the server. The communication method is optimized to include data for implementing functions of the application provided. The invention will be described herein in terms of its applicability to web based applications provided over the Internet. It will be recognized that the applicability of the architecture is not limited to the Internet, the particular operating environment described herein, nor the computing languages described herein.

The invention will be illustrated in the context of providing a web-based email service, and a spell-checking function for use within the web-based email service as one embodiment of an implementation of the invention. It will be recognized that the particular illustration of the architecture with the exemplary applications and functions does not limit the scope of applications and functions which may be implemented using the architecture and protocol of the present invention.

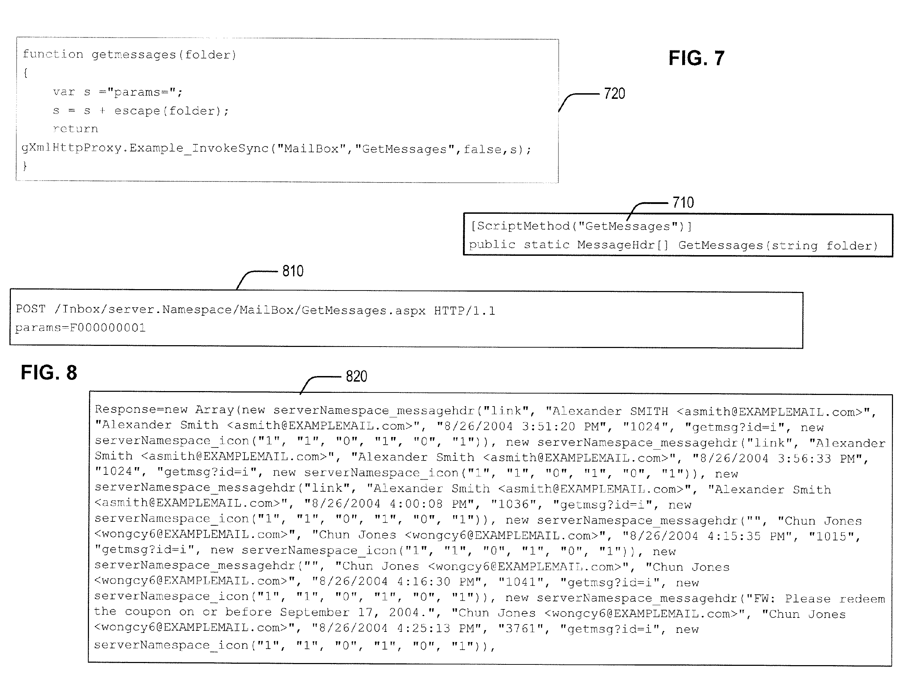

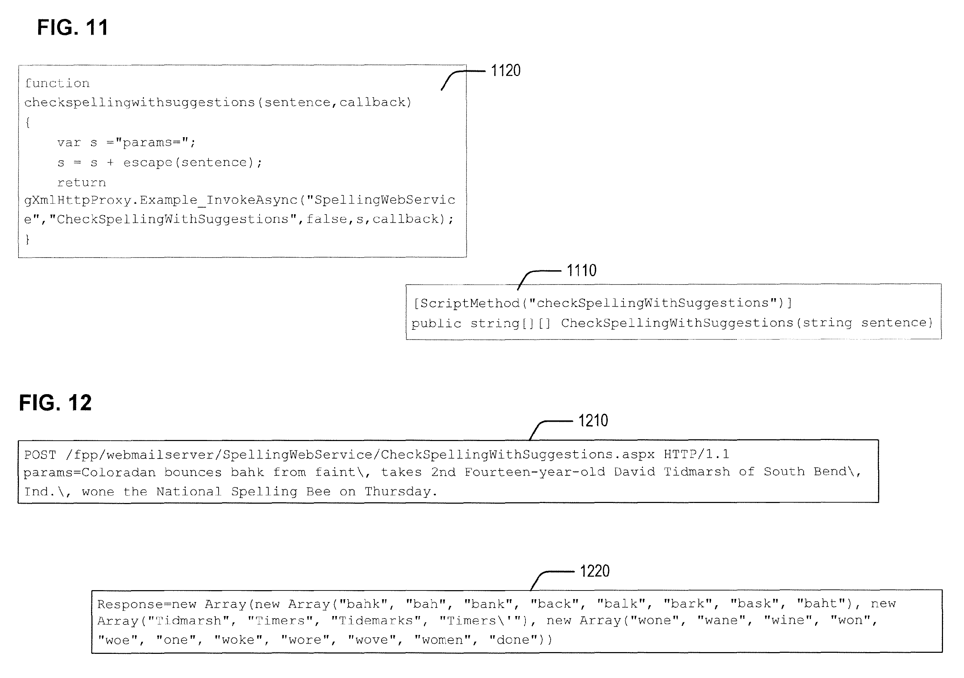

The architecture utilizes a unique post and response protocol which is asymmetric: the post protocol provides non-typed data to the server, while the response protocol includes data in a typed and scripted format. Automatically generated client side libraries are provided which correspond to each object and method which exists on the server. In a further unique aspect, a lightweight protocol moves data between the client and the server. Examples of the protocol are shown in Figs. 8 and 11. In a unique aspect, the client does type data sent to the server, and the server deals with the processing required for the date. The server sends the response back in script, which is 'typed' in that the data structures are known.

In general, a process for initializing and installing server side and client side components takes applications developed on the server, having classes and methods having attributes and creates a client environment and server environment. A code generator (referred to herein as a "CodeGen" engine or process) creates JavaScript client side library objects and stub components, often referred to herein as client side proxies, as well as server side code "proxies" for each object and component in the developed application. Once the environments are created, and the client environment installed, a server side service which includes a dispatcher and a marshaler routes data from functions on the client to corresponding objects and functions on the server. It will be understood that while the invention will be described herein with respect to its application using JavaScript, the architecture can incorporate other scripting environments.

In accordance with the invention, a developer creates an application on the server which results in a number of classes and methods. When the application is compiled, for example, dynamic link libraries (DLLs) or executable script objects (.exe files) are created. Following compiling of the application, for objects and methods marked by the developer for export, a CodeGen process creates objects in JavaScript for marked classes and stubs in JavaScript for marked methods. The JavaScripts are packaged in one or more JavaScript files that can be consumed by a web browser, and transmitted to clients connecting to the server to implement web-based applications.

The CodeGen process also creates server side proxy elements. In one embodiment, the CodeGen process creates C# code which runs on the server, with a direct mapping of objects and functions on the server to objects and stubs on the client. The CodeGen process also creates a marshaler, dispatcher and proxies that allow client invocations to activate server side components. This set of server application code is then compiled for server use. It should be noted the use of C# is also exemplary. Any object oriented programming language may be utilized in accordance with the present invention.

Once the CodeGen process is complete, a client library has been created that corresponds with the service side library. Client developers seeking to invoke services located on the server now have the ability to use the client side components in the same manner as the service side developer would. In this aspect, all the objects, protocols, interfaces, and APIs available on the server are available on the client.

The auto generated client and server code contains the protocol itself. When a client invokes a method in the local client library, the generated local JavaScript stub is executed. As a "proxy", its interaction with the server elements is transparent to the runtime. When the stub executes, any data required by application from the server in the function will cause a request to be routed to the server. Data in the request sent to the server is marshaledgathered and converting the data into a format that is prescribed for a particular function or object. In this case it is marshaled into a transport format defined by the type of object or method requested which is understood by a marshaler (or "de-marshaler" in this case) on the server.

The marshaler and dispatcher on the server takes the request, un-marshals the data in the request, and dispatches the request to the actual server side object or method. The service side code then creates a response based on the request and the function residing in the component, and passes the resulting data back to the client in a response format which can be interpreted by the script library on the client, for example as an array or an element. On the client, the auto generated client side JavaScript engine un-marshals the response and hands it back to the client for processing.

The protocol that is used between the client and server is based on the HTTP protocol, and managed using a client side object, such as XMLHTTP. XMLHTTP (Extensible Markup Language Hypertext Transfer Protocol) is a set of APIs that enables XML, HTML or binary data to be transmitted to and from Web servers over the Internet using HTTP. An advantage of XMLHTTP is that when files that are ASPs or CGI programs are queried from the client, the XMLHTTP can be used such that the client transparently to retrieve the latest information without the user having to repeatedly refresh the browser. Other types of objects can be utilized to provide this service.

A client invokes a method on the server by issuing an HTTP request against the URL that is encoded with information regarding the method to invoke. The URL is decoded on the server side to ensure that the service requested hooks into the request and the method required URL is called. The URL itself encodes the request schema. The necessary data to complete the response is encoded in the body of the HTTP request.

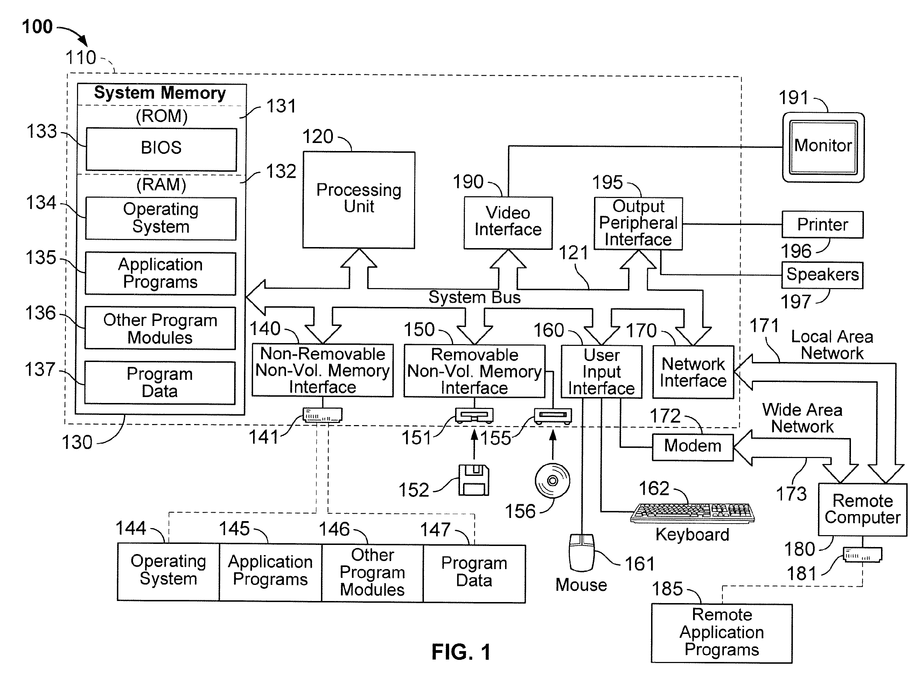

The architecture and methods described herein can be performed on a variety of processing systems. An example of a processing system suitable for implementing the present invention is illustrated in FIG1. FIG. 1 illustrates an example of a suitable general computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable, volatile/nonvolatile computer storage media. By way of example only, FIG. 1 illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

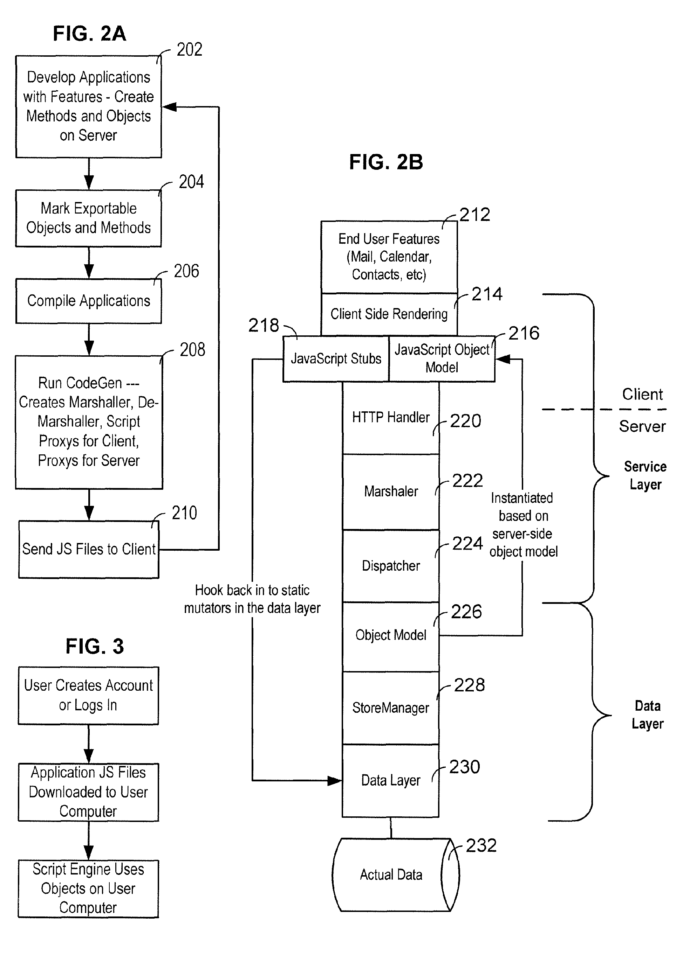

In order to implement applications utilizing the architecture of the present invention, the client and server side components of the architecture must be installed. FIG. 2A shows a first method for creating a client side environment in accordance with the present invention. FIG. 2B shows a logical perspective of the architecture.

In FIG. 2A, at step 202, a developer of a web application will create a web-based application using tools on the server. The created application will include functions and features using methods and classes having attributes. In one embodiment, development can take place in any number of application programming languages. In the present example, development takes place in the C# programming language, which is an object oriented programming language from Microsoft is designed to work with the .NET platform. The .NET platform is a software platform for web services and web applications implemented in the distributed computing environment. Once the applications and features are developed at step 202, methods and classes exist on the server. At step 204, a developer can mark as exportable those objects and methods which the developer seeks to make available to the client side application developer. In one embodiment, all the methods which are available on the server side can be marked for exportation. At step 206, the applications are compiled, resulting in dynamic link libraries and executable files. After the applications are compiled, at step 208, a code generation (CodeGen) process examines the dynamic link libraries and executable files that have been created, and creates scripted objects for those classes marked in step 204, as well as server code equivalent to run on the server that maps exactly to the script stubs and objects.

In one embodiment, the client objects are created in JavaScript, although other scripting languages may be used. One unique aspect of the present invention is the creation of such objects in a scripting environment such as JavaScript for the client device. Use of scripted objects allows the user of native scripting engines in web browser software on the client to implement the architecture described herein. At step 210, the script classes are then packaged in one or more files and then transmitted to the client at step 210.

New functions which are developed for the applications may create new methods or new classes. As a result, the process may loop back to step 202 such that when new features are developed, steps 204 through 210 are repeated so that new features implemented on the server are passed to the client environment.

FIG. 2B illustrates a logical view of the architecture of the present invention. To a particular user on a client device, a environment is relatively transparent. On a client device, the user will be exposed to end user features in the form of the web based application. In one example, this can be a web-based email service such as Microsoft Hotmail, which includes email messaging services, calendar functions and contact functions 212. Client side rendering 214 is provided by content and script stubs 218 using data provided by the server. An HTTP handler 220 on both the client side and the server side handles communications between the client and server devices. A marshaler 222 and dispatcher 224 coordinate providing requests from the HTTP handler to the object model code 226 created by the CodeGen process. For example, when a client calls a spell check function on the server, the client interface is actually a JavaScript function which takes a script array. The marshalling process on the client - implemented by the object model 216 built into the stubs 214 - takes each array (or element or combination of arrays or elements) and builds it up to the transport format. Generally, an array takes the form of a comma separated string of elements, where each element could be an array, integer string or some other structure. The marshalling process on the server is recursive, evaluating elements within the array. Both the object model 226 and JavaScript object model 216 are strongly typed, so an array sent for a given object has a well defined number of elements in the array, with exact types, and for compound types, the exact format of the compound type. The object model interacts with actual data 232 via a data layer 230 and store manager 228. Because the stubs are created based on the server object model 226, the stubs have a direct mapping of types and attributes to the data layer 230.

In order to provide the client side environment on a user system, as noted above, one or more script files needs to be sent to the client computing device and stored on the device. With web-based applications, typically such applications are supplied by a service provider. A service provider providing applications using the underlying architecture of the present invention can require a user to create a log-in or account to access a service, and the log in or account creation step can be used to install the client environment. In this case, a service provider may be considered a human or computer implemented process governing provision of the web-based service or application.

In FIG. 3, a user will create an account or log-in at step 300. Once the user initializes a log-in, the user's first experience will be to download the application JavaScript files which are downloaded at step 302 to the user's computer. At step 304, when the user begins interaction with the web service provided by the application server, a script engine uses the objects on a user computer to communicate the protocol of the present invention with the server side application classes and methods. It will be understood that a corresponding process runs on the server, which receives the request for a particular service or application from the user and initiates the download process of the client environment for the application.

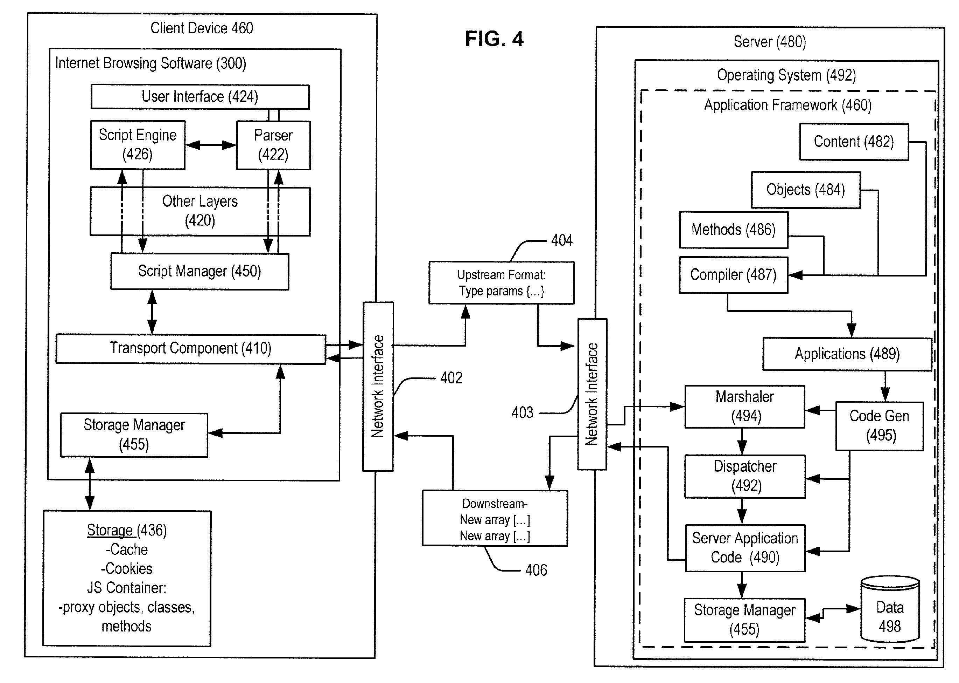

FIG. 4 is a block diagram of one system suitable for implementing the architecture and protocol of the present invention. FIG. 4 shows a client device 460 which may be a computing device 100 shown in FIG. 1, and an application server 420. As used herein "server" or "network server" includes any machine or combination of machines having data and applications maintained thereon or as shown in FIG. 4 as a block labeled 480.

Browsing software 300 executing in a client machine communicates via network interface 402 with the application server 480. Communication between the client device 460 and the server 480 may occur via one or more requests 402 and responses 404 over a network, or a combination of public and private networks, such as the Internet. Communication between the client device 460 and the server 480 typically uses the HTTP protocol, but the invention is not limited to the use of HTTP as the transport protocol.

Client device 480 includes a transport component 410 which handles some of the processing of the response 404. When content data is returned, data is passed from the transport component 410 and through other layers of code 420 to a scripting engine 426 and a parser/interpreter 422. The parser then parses and interprets the content for displaying to the user via the user interface 424. The parser 422 may invoke a script engine 426 as needed to interpret any script embedded in a reference by the content. Content may also be stored in local storage 436 which is accessed via a storage manager 455 that is included in or otherwise associated with the transport component 410.

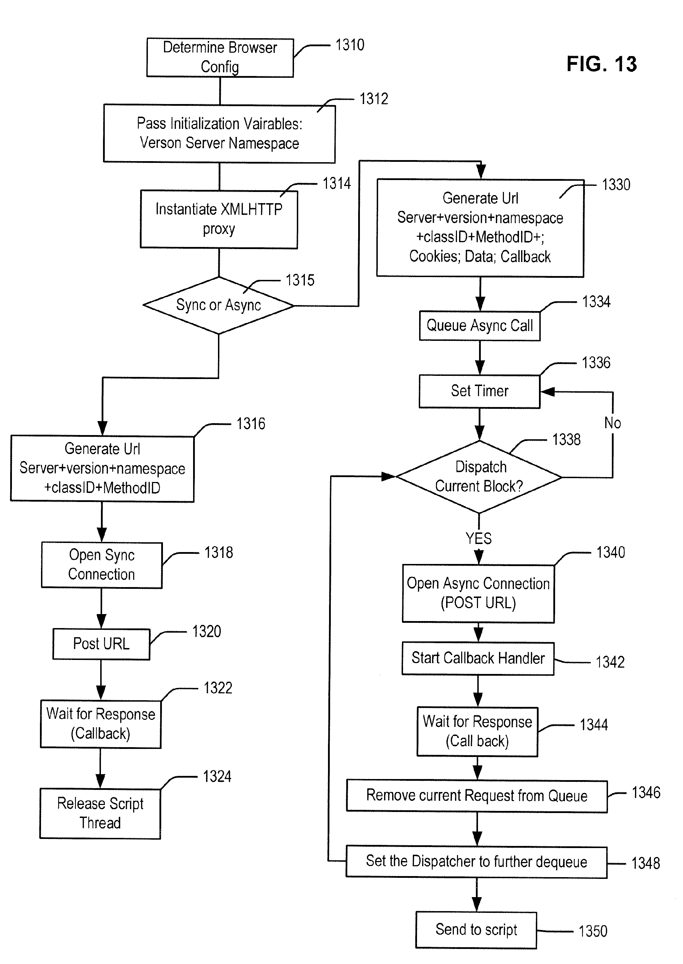

Storage 436 may also include a cache table, a data cache, cookies, and a JavaScript container including the JavaScript files set forth above. Transport component 410 includes or is otherwise associated with the storage manager 455 that stores and retrieves JavaScript and other information, such as cookies, in, for example a cookie container. A script manager 450 implements requests from the script engine executing stubs and objects from the client side scripts provided by the architecture. As discussed below, the script manager 450 handles two types of calls to the server 480 - synchronous calls and asynchronous calls which are directed to functions and objects on server 480. These requests are described below with respect to FIG. 13.

Server 480 may include a suitable operating environment 492 in which the invention may be implemented. The operating embodiment 492 is only one example of a suitable operating environment and is not intended to suggest any limitation as to the scope of a user functionality of the invention. One example of an operating environment is the Windows family operating systems available from Microsoft. The environment may include an application framework 460 which is a platform including design and run time objects, and controls which allow for the running applications on the web server. Although the framework is not required, certain services described herein may be included as components of the framework, or may likewise be incorporated into the operating system or provided as independent applications running in the operating system. The application framework may be that which is described above as the .NET application framework available from Microsoft Corporation. The application framework may include resource classes implementing functions such as encryption, compression and authentication which may be utilized in conjunction with the present invention.

Provided within the application framework are developed application content 482, objects 484, and methods 486. Applications 489 may be comprised of one or more classes and methods. A compiler 487 creates dynamic link libraries and executable files for applications 489. A CodeGen engine 495 is also shown within the application framework 460. As noted above, once the objects and classes are created for a particular application 489, and compiled by computer 487, the CodeGen engine 495 will create both client side scripting objects, a marshaler 494, dispatcher 492 and server application code 490.

Interaction between methods and classes in applications on the server takes place with server side objects. Responses are provided to the server side "proxy" objects 490 which then provide responses to the client device based on the call from the client side proxy.

The CodeGen engine 495 operates through a technique called "reflection" to analyze a compiled piece of software to automatically produce a set of parsers, converters, formatters, and text writers (collectively "stubs") that implement marshalling, de-marshalling, and dispatching. A reflection mechanism is provided in the application framework, and is a technique to discover class and object definitions at runtime. In effect, the CodeGen engine it is a compiler that recompiles compiled code. The CodeGen engine takes variables, such as its own conditions, and contextual information into account. CodeGen's stubs dispatch functions asynchronously as part of its automatically generated framework. It is also able to proxy collection types such as Hashtables; this feature is not available in SOAP. And finally, CodeGen is able to seamlessly propagate server exceptions to the client. The resulting JavaScript stubs will include definitions matching the runtime attribute definition of the server's application classes and objects.

Once the server application code 490 is created, the code interacts with a storage manager 455 on server 480 to access data 498. Requests from client device 460 are received by marshaler 494 and distributed by dispatcher 492. When a request is received by server 480, the dispatcher tells the server what function the client is trying to execute. The invocation call is built into the request URL received from the client as part of the request 404. In one aspect, the URL includes a representation of a .Net namespace. All programming code for the particular application appears in namespace "application.namespace". The dispatcher 492 keys off that information. The marshaler 494 separates the components of the URL, examines each element and when it matches, the dispatcher delegates the information in the request through to that function in the application code 490.

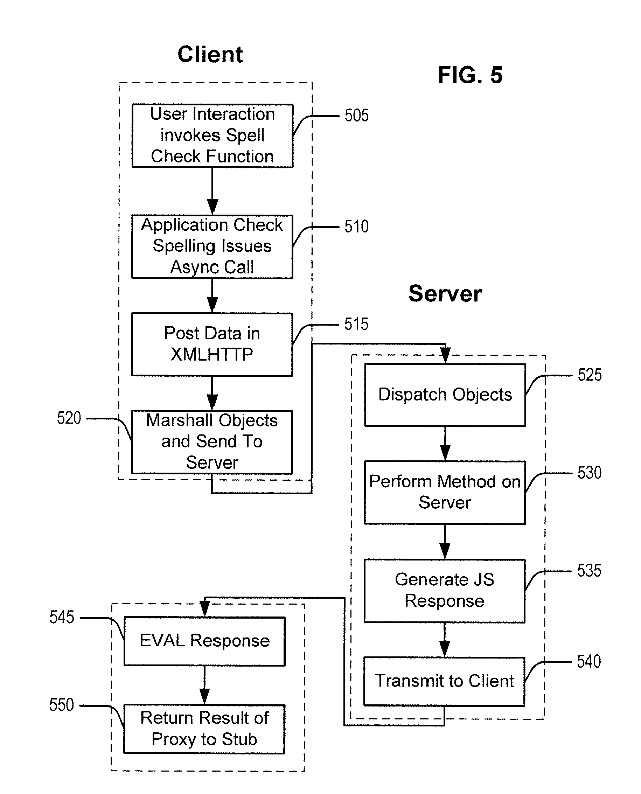

FIG. 5 is a flow chart illustrating general process for a spell check application running on the client to invoke a method running on the server and receive responses from the server. Generally, when a client calls a spell check function on the server, the client interface is actually a script function which takes as input a script array. The script manager includes a marshalling process which takes each array and builds it up to an upstream transport format. In one embodiment, the format is an array viewed as braces followed by comma separated list of the elements inside.

In FIG. 5, a spell check function will be generally started by some user interaction at step 505. The user interaction can be a specific call to the function in another application program, such as an email application or text editor, or the function may be automatically invoked when the user presses a "send" instruction for an email message. At step 510, the JavaScript application "check spelling" will, in accordance with the functions defined therein, issue a request which includes data or attributes for the server side function "check spelling". At step 515, the data is marshaled into the typed format for the "check spelling" function on the server and at step 520, an XMLHTTP request is sent via the transport component to the server side method. Examples of the request are illustrated below with respect to FIGs. 7 - 10.

At the server side, the request will be de-marshaled and converted into a typed object. Steps 525, 530, 535 and 540 are performed on the application server 480. At step 525, when the request is received, it will be operated on by the marshaler 494 and dispatcher 492 to dispatch the object to specific functions on the server at step 525. The method invoked will then operate on the request data at step 530 and return some response. The response is converted to a JavaScript response at step 535, and transmitted to the client in the downstream format by the application server code 490. The server side proxy turns the results of a server side function call into JavaScript, and the script is sent back to the client and interpreted by the script manager. The script engine parses though the JavaScript response and evaluates it. In this manner, a "de-marshaler" is not necessary on the client - an EVAL function takes care of the equivalent of de-marshalling.

Steps 545 and 550 occur on the client. Upon receipt of the response by the client side script at step 545, an EVAL operation will be performed on the response. The EVAL function takes a string representing a JavaScript expression, statement, or sequence of statements. The expression can include variables and properties of existing objects. If the argument represents an expression, EVAL evaluates the expression. If the argument represents one or more JavaScript statements, EVAL performs the statements. The output of the EVAL function is sent to the requesting stub at step 550.

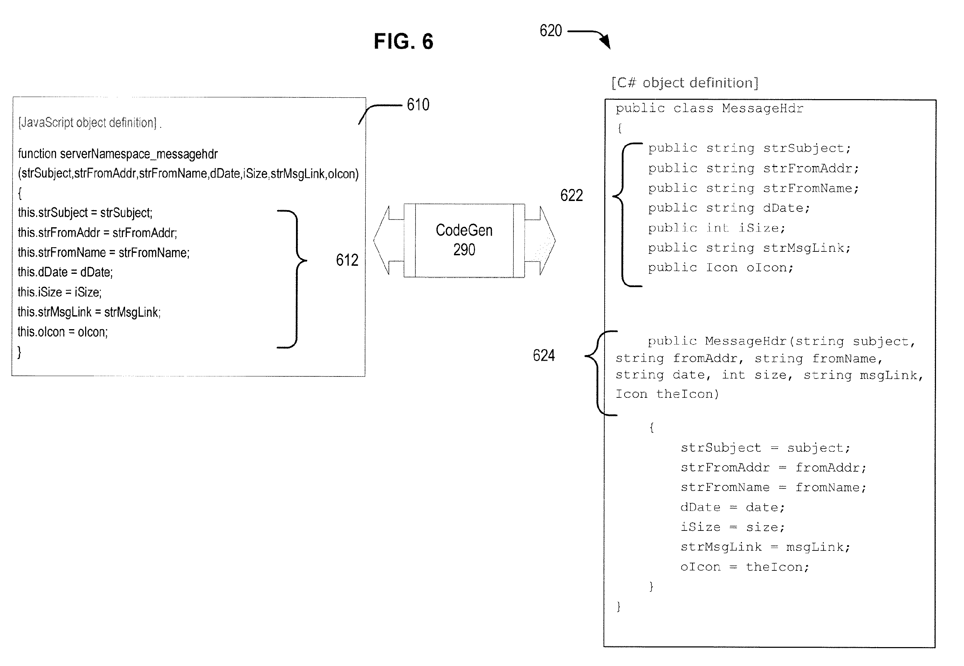

FIG. 6 illustrates the output of the CodeGen process for a class "message header". The message header class may comprise information provided in an email message. As shown in FIG. 6, a typical email message header can include a subject, from address, from name, date, size, message link and a status icon. The C# object definition 620 is created on the server, while the JavaScript object definition 610 created for the client by the Code Gen process. The C# object definition includes an attribute declaration 622 for the aforementioned attributes of the object followed by a script constructor 624 which defines the strings "subject = strSubject, fromAddr = strFromAddr, fromName = strFromName, date = dDate, size = iSize, msgLink = strMsgLink, thelcon = olcon"). The corresponding JavaScript object definition includes elements 612 from the C# object definition as well as the function definition to the name space "serverNamespace" and message header function "messagehdr" on the server which contains the C# object.

FIG. 7 illustrates an example of an example C# interface 710 for the function "GetMessages" and its associated javascript stub 720. The function GetMessages takes as it's argument the MessageHdr object, defined above. The server side C# interface "get messages" requires a defined input of a particular user's folder for a user having a mailbox on a server 280. The client side JavaScript stub 720 includes a function calling the object known as "gXMLHTTPProxy" which coordinates asynchronous and synchronous XMLHTTP requests to the server. The functions of gXMLHTTPProxy are discussed below with respect to FIG. 13. In the example of FIG. 7, the function "GetMessages" is a synchronous request.

As noted above, in formulating requests for the server, the script manager 255 can perform a synchronous or asynchronous request. In a synchronous request, as detailed further below, the client will react in a manner very similar to a "POST" function in HTTP. That is, though a client will request some data from the server side method, and will wait, holding the application suspended, until the data is received from the server. In a synchronous request JavaScript makes a call to the server to retrieve the data, and waits for the server to come back before providing the results to the JavaScript in the web browser. The synchronous request is essentially a blocking call, wherein the browser is frozen until the server comes back.

An asynchronous request does not make a call to the data right away. An asynchronous request is placed in a queue and requests are sent to the server in a non-blocking call through an XMLHTTP object. For example, if one requests a spell check function be implemented in a web browser, one can continue to type an email while the spell check function is taking place on the server. When data comes back, the JavaScript picks up the call and starts up the spell checking function again.

FIG. 8 illustrate an example of a request 810 and a response 820 generated by the GetMessages script and function. The upstream request takes the general format of a URL in the format: Server + Version + Server Namespace + classld + methodld. In the example shown in FIG. 8, the POST operation includes a request for the GetMessages function for a given folder F000000001. The response to the POST is a new array including elements defined in the C# object definition of the MessageHdr which are directly mapped to the script definition 610. The response example 820 shows an array of MessageHDR objects retrieved from the application server.

As such, the response format (which in this case is an array but may include other formats) is exactly known to the scripted object on the client, which can then parse the data received in the array and provide it to any rendering scripts on the client for display to the user interface of the client processing device.

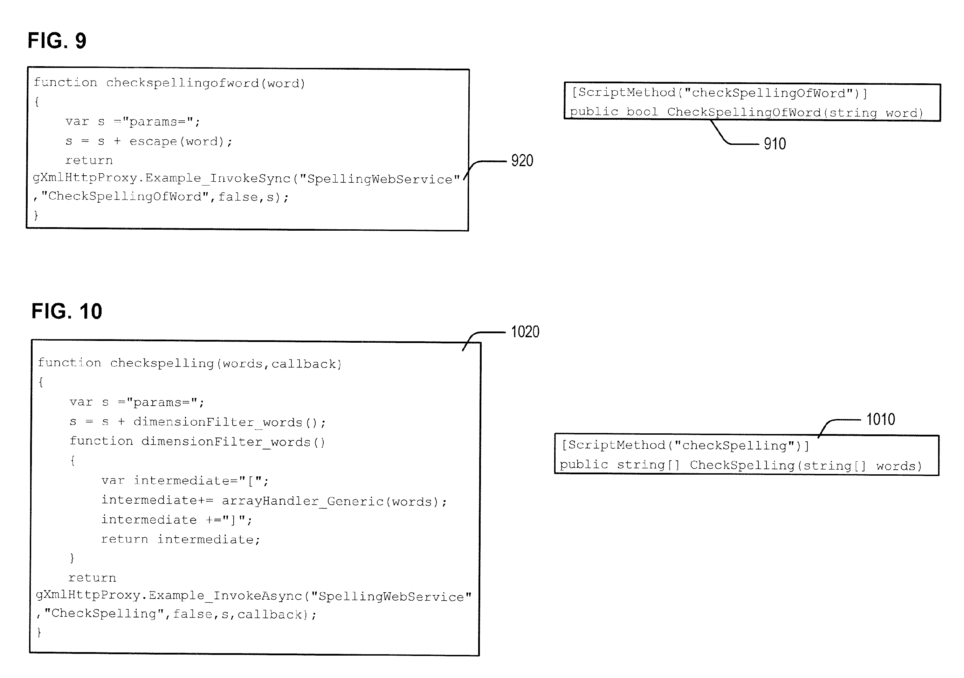

FIGs. 9 and 10 illustrate additional examples of objects and functions which are created by the CodeGen process 290 operating in the application framework 260. The examples in FIGs. 9 and 10 are for two spell checking methods which may be utilized in a spell check application. Fig 9 illustrates the function "checkspellingofword," which takes as input a single word, checks its spelling, and returns an indication of whether the spelling is correct or incorrect. The function returns a true/false result. The script stub 910 illustrates a synchronous call "EXAMPLEInvokeSync" for the gXMLHTTP object. As a result, the script 910 will wait for the return answer for the method 920 before releasing the application on the client.

FIG. 10 illustrates the interface "checkspelling" 1010 which takes as input a number of words and responds with a string. The script function 1020 includes an additional filter -- "dimensionFilter_words" which is script which can marshal the call into the protocol format. The script 1020 is an example of an asynchronous request call "EXAMPLEInvokeAsync" to the gXMLHTTP object. As a result, the script 1020 will queue requests for processing and wait for results without freezing the browser scripting engine. The script 1020 also includes a script provided Callback function, allowing the gXMLHTTP proxy to wait for responses from the server which are running while the client continues performing other functions.

FIG. 11 illustrates another interface/stub relationship. FIG. 12 shows a request/response example for the interface/stub relationship shown in FIG. 11. In FIG 11, the interface for the function "checkspellingwithsuggestions" is shown and takes as input a sentence (or sequence of sentences), and responds with a string of "suggestions." The invocation of the gXMLHTTP object is asynchronous in this example.

An exemplary POST request for the checkspellingwithsuggestions function shown in FIG. 11 is illustrated in FIG. 12. The POST function is again provided in the format Server + Server Namespace + Version + classld + methodld, and in this example the defined protocol includes the string definition accessible to the checkSpellingWithSuggestions function. The response is provided in a new array comprising two nested arrays.

The array is a standard JavaScript array which can be interpreted by the JavaScript engine and scripting environment on the client. Because the JavaScript function check spelling 1120 is expecting a string array, the array can be fed directly into the scripting environment and operated on by the JavaScript virtual machine. Hence, from the browser to the server, the protocol is highly optimized for transport. Calls to the server side objects and methods are provided in a strongly typed format since the client side function includes the type definition of the server object. Data is returned to the client in JavaScript, and it can be EVALed on the client side by the standard EVAL function in JavaScript language. The EVAL function can determine whether the JavaScript is a function, a creation of an array, or the creation of an object, so that after the evaluation process, it also becomes an object in the JavaScript object model.

FIG. 13 illustrates the gXMLHTTP object controlling asynchronous and synchronous XMLHTTP requests to the server. Initially, in step 1310, the process determines the exact browser configuration and whether the browser is suitable for use in the architecture of the present invention. At step 1312, initialization variables are passed to the object which includes version, server and namespace identifications.

The XMLHTTP object includes a constructor which instantiates a synchronous XMLHTTP function, an asynchronous XMLHTTP function, a stack of work items or request blocks, a current request block that is in service, a timer, and cookie handling functions.

At step 1314, the method attempts to instantiate the XMLHTTP proxy for HTTP communications using the HTTP services of the transport component 410 of the browser. Next, at step 1315, the method invokes the synchronous or asynchronous functions, depending on the calling script definition.

If the method invokes a synchronous XMLHTTP request, the script thread calling the XMLHTTP method is suspended and does not return the data until the XMLHTTP succeeds or times out. At step 1316 a synchronous XMLHTTP request will begin by generating the URL call to the server, examples of which are set forth above. Once the URL is generated, at step 1318, a synchronous connection is opened and the URL posted to the server at step 1320. Subsequently, the method waits for a response which may be a single parameter - responseText. Once the response is received or times out, it is provided to the calling script and the script thread is released at step 1324. The response can thereafter be evaluated in accordance with the foregoing description using the EVAL function on the client.

At step 1315, if the request is for an asynchronous XMLHTTP request, then at step 1330 likewise begins with the generation of a URL. In this case, the URL includes a callback function in addition to the above identified components. The callback is a user-supplied function that the XMLHTTP proxy invokes after the asynchronous call has completed. It takes one parameter, the XMLHTTP response text. After the URL is generated, at step 1334, the system queues the asynchronous call and sets a timeout timer 1336. The queuing step 1334 calls a dispatcher function which determines at step 1338 whether there is a currently executing block at the server. If so, the function goes back to sleep by looking to step 1336.

As long as the queue stack is not empty, there is a request in the process and that request will take care of invoking dispatcher once it has finished. Therefore, a timeout window is only called when it detects that the stack was already empty. Once the block is empty at step 1338, an asynchronous connection is opened and the URL posted at step 1340. Once the call is queued at step 1342, a callback handler is started at 1344.

The callback handler waits for the XMLHTTP operation to complete and the callback is executed. When the response is received at 1344, the current request is removed from the dispatch queue 1346, and dispatcher is set to further dequeue at step 1348. The response is passed to the calling script at step 1350.

The foregoing detailed description of the invention has been presented for purposes of illustration and description. It is not intended to be exhaustive or to limit the invention to the precise form disclosed. Many modifications and variations are possible in light of the above teaching. As noted herein, numerous variations on the architecture of the present invention are possible without departing from the scope and content of the present invention. In one embodiment, requests and responses can be compressed and encrypted.

The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. An system for providing a networked application in a client-server environment, comprising:
a set (489) of application functions on the server, the application functions including a type definition; and
a set of client functions (436) defining a scripting environment, the client functions defined to include types matching each of the application functions in the set of application functions.

2. The system of claim 1 further including a request engine (450) on the client processing requests from client functions to server functions.

3. The system of claim 2 wherein the request engine (450) submits requests in the type format (404) of a client function corresponding to the type definition for the server function requested.

4. The system of claim 2 wherein the engine is responsive to a requesting client function(426, 436), and the type definition is contained in the client function.

5. The system of claim 2 wherein the request engine (450) includes a scheduler processing synchronous and asynchronous requests.

6. The system of claim 2 wherein the request engine (450) includes a response listener receiving response call backs from the server function.

7. The system of claim 1 wherein one or more type definitions (450) include a set of attributes.

8. The system of claim 1 wherein the set of client functions (436) is provided in JavaScript (210).

9. The system of claim 1 further including code (490) providing a response to a client request on the server.

10. The system of claim 9 wherein the code (490) provides the response in a script parsable format (406).

11. The system of claim 9 wherein said code includes a marshaler (494).

12. The system of claim 9 wherein said code includes a dispatcher (492)

13. The system of claim 1 further including a generation engine (426) creating client side functions from functions specifically marked for export.

14. The system of claim 1 further including a generation engine (426) creating a marshaler (494) for the server.

15. The system of claim 1 further including a generation engine (426) creating a dispatcher (492) for the server.

16. A method for providing web applications on the Internet, comprising:
providing (202) a server environment including functions and objects on a server, the objects and functions having defined types;
generating (208) a client environment including functions and objects in a scripting environment (426), the functions and objects in the scripting environment having types mapping to corresponding functions and objects in the server environment; and
providing (210) the client environment (426) to the server.

17. The method of claim 16 wherein the step of generating includes outputting (210) the functions and objects in a scripting language.

18. A system implementing Internet applications, comprising:
a server (480) including a set of application objects (486) and methods (484) each having a defined type;
a generation engine (495) creating a client set of scripts calling said objects and methods, each script having a type definition matching at least one object or method of said set of application objects and methods; and
a response engine (494) receiving requests from one or more client scripts on a client processing device and routing said requests to one of said application objects and methods.

19. The system of claim 18 wherein each client script includes defined attributes (720) which are mapped to a corresponding server object or method.

20. The system of claim 18 wherein the generation engine (495) is a reflective process.

21. A method of communicating between a client process and a server process in a distributed processing system, comprising the steps of:
(a) issuing (520), by the client process, a function request to the server, the function request including a data string having a format defined by a type of a server function requested;
(b) receiving, by the server process, the function call and performing (530) the requested function on the string; and
(c) issuing (540), by the server process, a response to the function request, the response being in a client side processing format defined by the object

22. The method of communicating as defined in claim 21 wherein the client process includes a type definition (515) corresponding to the function requested.

23. The method of communicating as defined in claim 21 wherein the steps of issuing and receiving are performed using the HTTP protocol.

24. The method of communicating as defined in claim 23 wherein issuing step (a) comprises issuing the function request in a URL (810, 1210).

25. The method of communicating as defined in claim 24 wherein issuing step (a) comprises generating a URL (810) including a function identifier.

26. The method of communicating as defined in claim 24 wherein issuing step (a) comprises generating a URL (1210) including said data string in a comma separated list ordered by a type definition of the function requested.

27. The method of communicating as defined in claim 24 wherein the URL (810) contains a version number of the protocol.

28. The method of communicating as defined in claim 21 wherein issuing step (c) comprises issuing the response in (820, 1220) a format which may be interpreted by a script.

29. The method of communicating as defined in claim 28 wherein issuing step (c) comprises issuing the response in a JavaScript format (710).

30. The method of communicating as defined in claim 28 wherein issuing step (c) comprises issuing the response in an array (1220).

31. The method of communicating as defined in claim 28 wherein issuing step (c) comprises issuing the response in a nested array (1220).

32. The method of communicating as defined in claim 28 wherein the method is an object (610).

33. The method of communicating as defined in claim 32 wherein the method is an object of objects (620).

34. The method of communicating as defined in claim 32 wherein the method is an object of arrays (620).

35. The method of communicating as defined in claim 32 wherein object of primitive data types (620).

36. The method of communicating as defined in claim 28 wherein where the response is a primitive data type (620).

37. A protocol for communication between a first computer and a second computer, comprising:
a request (404, 810)) from the first computer to the second computer including a function identifier for a function on the second computer and an argument for the function, the argument defined by a type for a function called by the function identifier; and
a reply (406, 820) from the second computer to the first computer including the results of the function, the reply defined as a script input.

38. The protocol defined in claim 37 wherein the argument (820) includes data organized based on said type.

39. The protocol as defined in claim 37 wherein the argument (820) includes a data string in a comma separated list ordered by the type definition of the function called.

40. The protocol as defined in claim 37 wherein the script input (720) is a JavaScript format.
